# EUROPEAN PATENT SPECIFICATION

(11) **EP 0 940 563 B1**
(45) Date of publication and mention of the grant of the patent: **22.02.2006**
(21) Application number: 99104199.7
(22) Date of filing: 02.03.1999
(51) Int. Cl.: F01K 23/10, F02C 7/143

(54) **Gas turbine combined cycle**
Gasturbinenkombikraftwerk
Cycle combiné avec turbine à gaz

(30) Priority: 04.03.1998 JP 5187998
(43) Date of publication of application: 08.09.1999
(73) Proprietor: MITSUBISHI HEAVY INDUSTRIES, LTD., Tokyo 100-0005 (JP)
(72) Inventor: Sugishita, Hideaki Takasago R&D Center, Arai-cho, Takasago-shi, Hyogo-ken (JP); Mori, Hidetaka Takasago Research & Dev. Center, Arai-cho, Takasago-shi, Hyogo-ken (JP); Tsukuda, Yoshiaki Takasago Mach. Works of, Arai-cho, Takasago-shi, Hyogo-ken (JP); Uematsu, Kazuo Takasago Mach. Works of Mitsubishi, Takasago-shi, Hyogo-ken (JP); Akita, Eiji Takasago Mach. Works of Mitsubishi, Takasago-shi, Hyogo-ken (JP)
(74) Representative: Henkel, Feiler & Hänzel

(56) References cited:
- EP-A- 0 709 561
- DE-A- 4 237 665
- DE-A- 4 446 862
- FR-A- 1 060 268
- JERICHA H: "BRENNSTOFFEINSPARUNG UND UMWELTSCHUTZ BEI WAERME-KRAFT-KOPPLUNG DURCH MODERNSTE GASTURBINEN IM KOMBINIERTEN GAS-DAMPF-PROZESS MIT ABWAERMEVERWERTUNG" ELEKTROTECHNIK UND INFORMATIONSTECHNIK, SPRINGER VERLAG, WIEN, AT, vol. 109, no. 11 / 12, 1992, pages 558-562,563-56, XP000327398 ISSN: 0932-383X

## Description

### BACKGROUND OF THE INVENTION

### 1. Field of the Invention:

The invention relates to a gas turbine combined cycle which drives a gas turbine by a combustion gas obtained by blowing a fuel into a high pressure air and burning so as to generate a power or the like and drives a steam turbine by a steam generated by recovering heat from an exhaust gas driving the gas turbine so as to generate a power or the like also in the steam turbine, thereby improving a heat efficiency, and more particularly to a gas turbine combined cycle which cools a compression air discharged from a low pressure compressor before being made a high pressure air by a high pressure compressor so as to make a drive force of the high pressure compressor driven by the gas turbine small, and uses a heat energy recovered by the cooling for driving the steam turbine, thereby further improving the heat efficiency.

### 2. Description of the Related Art:

There has been conventionally practiced a gas turbine combined cycle which drives a gas turbine by a combustion gas obtained by burning a high pressure air and a fuel and drives a steam turbine by a steam generated by an exhaust gas discharged from the gas turbine so as to generate a power or the like.

In this gas turbine combined cycle, it is structured such that the gas turbine driven by the combustion gas outputs the drive force for operating the power generator or the like outward and drives the compressor for generating the combustion gas having a high temperature and a high pressure. On the contrary, the compressor driven by the gas turbine is provided with a low pressure compressor and a high pressure compressor and compresses the introduced ambient air by two steps so as to make a high pressure air, thereby supplying to a combustion device to which a fuel is blown so as to generate a combustion gas.

That is, the high pressure compressor is structured such as to suck a high temperature compression air compressed in the low pressure compressor in an adiabatic manner and becoming 190°C or more and further increase the pressure of the compression air to a high pressure air, thereby supplying to the combustion device.

Accordingly, the drive force of the high pressure compressor is increased and much of the drive force generated in the gas turbine is consumed, so that the drive force which the gas turbine can output outward is reduced at that degree. Accordingly, it causes a reduction of an efficiency of the gas turbine combined cycle.

Therefore, there has been employed an intermediate cooling type gas turbine combined cycle (hereinafter, refer to as an intermediate cooling type combined gas turbine cycle) which is structured such as to cool a high temperature compression air discharged from the low pressure compressor in an intermediate cooling device and supply the compression air cooled to about 100 °C to a high pressure compressor so as to increase the pressure to a high pressure air, thereby making a drive force supplied from the gas turbine for driving the high pressure compressor small so as to improve a drive force capable of being taken out outward from the gas turbine.

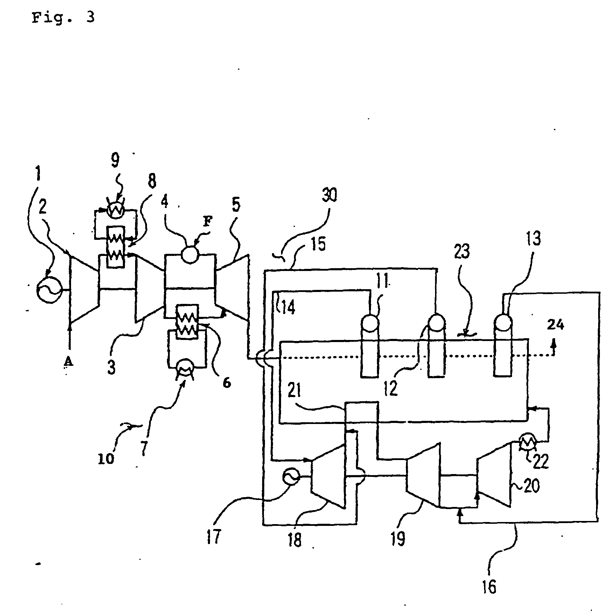

Fig. 3 is a systematic view which shows an intermediate cooling type gas turbine combined cycle in accordance with the conventional art.

As shown in the drawing, an intermediate cooling type gas turbine combined cycle 30 is constituted by a gas turbine portion 10 comprising a power generator 1, a low pressure compressor 2, a high pressure compressor 3, a combustion device 4 (combustor), a gas turbine 5, a rotor cooling cooler 6, cooling towers 7 and 9 and an intermediate cooling device 8, and an exhaust gas heat recovery portion 23 comprising a high pressure steam generating device 11, an intermediate steam generating device 12, a low pressure steam generating device 13, a high pressure steam pipe 14, an intermediate pressure steam pipe 15, a low pressure steam pipe 16, a power generator 17, a high pressure steam turbine 18, an intermediate pressure steam turbine 19, a low pressure steam turbine 20, a reheater 21 and a condenser 22.

The high pressure compressor 3, the low pressure compressor 2 and the power generator 1 are coaxially connected to the gas turbine 5 of the gas turbine portion 10, and as mentioned below, it is structured such as to drive the compressors by the gas turbine 5 driven by the combustion gas so as to make an ambient air A to a predetermined high pressure air for performing a combustion and generate a power.

At first, the ambient air A is sucked from an intake port of the low pressure compressor 2 driven by the gas turbine 5, compressed in an adiabatic manner and increased to a predetermined low pressure, thereby being discharged from the discharge port as a high temperature compression air having a temperature equal to or more than 190°C.

When introducing the compression air having a high temperature to the high pressure compressor 3 as it is and increasing the pressure, the drive force of the high pressure compressor 3 required for increasing the pressure is increased, thereby the drive force supplied from the gas turbine 5 for driving the high pressure compressor 3 is increased and the drive force for driving the generator 1 is reduced at that degree, so that the intermediate cooling device 8 having the cooling tower 9 is provided between the discharge port of the low pressure compressor 2 and the suction port of the high pressure compressor 3 so as to cool the compression air discharged from the low pressure compressor 2 to about 100 °C and introduce to the high pressure compressor 3.

The high pressure air increased by the high pressure compressor 3 is introduced to the combustion device 4, mixed with a fuel F introduced to the combustion device 4 in the same manner and burned so as to be a combustion gas having a high temperature and a high pressure, thereby driving the gas turbine 5 in the manner mentioned above.

Further, a part of the high pressure air discharged from the high pressure compressor 3 or a high pressure air extracted from a middle step of the high pressure compressor 3 (hereinafter, refer to as an extracted steam) is cooled to about 200°C by the rotor cooling cooler 6 and supplied to an inner portion of a rotor blade or a stator blade of the gas turbine 5 exposed to the high temperature combustion gas after passing within the rotor of the gas turbine 5, thereby cooling them from the inner portion thereof.

Still further, the high temperature exhaust gas driving the gas turbine 5 and discharged from the gas turbine 5 is discharged to the ambient air from a chimney 24 via the discharged heat recovery portion 23.

Next, in the exhaust gas heat recovery portion 23, a recovery of the heat within the exhaust gas is performed by successively passing the exhaust gas from the gas turbine 5 through the inner portions of the high pressure steam generating device 11, the intermediate pressure steam generating device 12 and the low pressure steam generating device 13 which are arranged in the discharged heat recovery portion 23 so as to respectively generate the steams having a high pressure, an intermediate pressure and a low pressure. The steams having the respective pressures are fed to the high pressure steam turbine 18, the intermediate pressure steam turbine 19 and the low pressure steam turbine 20 coaxially connected respectively by the high pressure steam pipe 14, the intermediate pressure steam pipe 15 and the low pressure steam pipe 16, expand within the turbines so as to rotate the respective steam turbines, drive the power generator 17 coaxially connected to the steam turbines, and generate an electric energy.

Further, in an outlet of the high pressure steam turbine 18, it is structured such as to mix the exhaust gas driving the high pressure steam turbine 18 with the intermediate pressure steam generated in the intermediate pressure steam generating device 12 and supplied by the intermediate pressure steam pipe 15, thereafter be heated by the reheater 21 arranged in the exhaust gas heat recovery portion 23, increase a temperature of an inlet of the intermediate pressure steam turbine 19, be supplied to the intermediate pressure steam turbine 19 and increase an output.

Further, in an outlet of the intermediate pressure steam turbine 19, it is structured such as to mix the exhaust gas driving the intermediate pressure steam turbine 19 with the low pressure steam generated in the low pressure steam generating device 13 and supplied by the low pressure steam pipe 16 and thereafter be supplied to the low pressure steam turbine 20.

Still further, in an outlet of the low pressure steam turbine 20, it is structured such as to return the exhaust vapor gas discharged from the low pressure steam turbine 20 to a water by the condenser 22 and be supplied to each of the high pressure steam generating device 11, the intermediate pressure steam generating device 12 and the low pressure steam generating device 13 as a condensed water.

In the intermediate cooling type gas turbine combined cycle 30 structured in the manner mentioned above, it has been known that the following advantages exist in comparison with the simple gas turbine combined cycle in which the conventional intermediate cooling device 8 is not provided.
(a) It is possible to reduce the power of the high pressure compressor 3 for increasing the pressure of the compression air driven by the gas turbine 5 and compressed by the low pressure compressor 2 to a pressure for supplying to the combustion device 4 by reducing the temperature of the compression air in the inlet of the high pressure compressor 3 in the intermediate cooler 8, so that there is an advantage that an outward output supplied from the gas turbine 5 to the power generator 1 and the like is increased at that degree.
   That is, since the power required for the high pressure compressor 3 can be relatively reduced with respect to the output of the gas turbine 5, the power required for the high pressure compressor 3 can be reduced even under a high ambient air temperature, so that there is an advantage that a reduction of an efficiency of the gas turbine 5 can be restricted.
(b) Further, also in the conventional simple gas turbine combined cycle, it has been performed that the high pressure air is extracted from the high pressure compressor 3 and used for cooling the high temperature portion in the rotor blade, the stator blade and the like of the gas turbine, however, in the intermediate cooling type gas turbine combined cycle, since it is structured such as to reduce the temperature of the inlet of the high pressure compressor 3 by the intermediate cooling device 8 and cool the high pressure air from the high pressure compressor 3 by the rotor cooling cooler 6 so as to supply to the high temperature portion, it is possible to reduce the temperature of the outlet in the high pressure compressor 3, reduce the temperature of the cooling air used for cooling the high temperature portion of the gas turbine 5, and further reduce the cooling air flow amount from the high pressure compressor 3 by the rotor cooling cooler 6.
   The reduction of the cooling air flow amount causes a reduction of a mixing loss corresponding to a pressure loss generated when the combustion gas and the cooling air flowing within the turbine gas pass are mixed, thereby increasing an efficiency and an output of the gas turbine 5, and it is possible to increase the output of the gas turbine 5 by an increase of the air flow amount of the high pressure flowing into the combustion device 4 from the high pressure compressor 3.
(c) Further, it is also possible to increase an efficiency and an output of the gas turbine by a reduction of a discharged heat from the rotor cooling cooler 6 generated when reducing the extracted air temperature for cooling the high temperature portion of the gas turbine by the rotor cooling cooler 6 to a predetermined cooling air temperature.

As mentioned above, in accordance with the conventional intermediate cooling type gas turbine combined cycle, there is the advantage that it is possible to increase the gas turbine output and the combined output, however, since it is structured such that the discharged heat from the intermediate cooling device 8 and the rotor cooling cooler 6 for generating the advantage is discharged to the ambient air by the cooling towers 7 and 9, the efficiency of the gas turbine 5 is reduced at the discharge amount. Further, since the discharge heat from the intermediate cooling device 8 and the rotor cooling cooler 6 has a great disadvantage of reducing the efficiency of the exhaust gas heat recovery portion 23 constituting the intermediate cooling type gas turbine combined cycle 30 by a combination with the gas turbine portion 10, it has not been actually applied to the conventional gas turbine combined cycle.

In this connection, when the compression air discharged from the low pressure compressor 2 becoming 190 °C or more is cooled to about 100 °C by the intermediate cooling device 8 so as to be supplied to the high pressure compressor 3, the calorie discharged from the cooling tower 9 to the ambient air frequently reaches 5 MW, so that there is a disadvantage that the temperature of the high pressure air supplied to the combustion device 4 is reduced and the efficiency of the gas turbine 5 is reduced in spite that the advantages (a) to (c) mentioned above can be obtained. Further, there are disadvantages that the temperature of the exhaust gas from the gas turbine 5 is reduced, the calorie recovered by the exhaust gas heat recovery portion 23 is reduced and the drive force output from the exhaust gas heat recovery portion 23 to the outer portion is reduced.

DE 42 37 665 A discloses a gas turbine combined cycle with the features of the preamble portion of claim 1. This reference specifically discloses a low pressure compressor and a high pressure compressor and an intermediate cooling device between the low and high pressure compressors. An exhaust gas heat recovery portion for recovering exhaust heat from a gas turbine driven by the combustion gas from a combustion device is provided for generating steam to drive a steam turbine. Water condensed in a condenser from the exhaust vapour gas discharged from the steam turbine is branched off and led to the intermediate cooling device to generate steam for driving the steam turbine.

EP-A-0 7.09 561 discloses a gas turbine combined cycle in which a cooler is provided for cooling high pressure air extracted from a compressor and led further to high temperature parts of the system to cool the same. The cooler is supplied with water from a condenser to generate steam for driving a steam turbine.

The document Jericha H: "Brennstoffeinsparung und Umweltschutz bei Warme-Kraft-Kopplung durch modernste Gasturbinen im kombinierten Gas-Dampf-Prozeß mit Abwarmeverwertung", Elektrotechnik und Informationstechnik, Springer Verlag, Wien, AT, vol. 109, no. 11/12, 1992, pages 558-562., 563-569 discloses a gas turbine combined cycle with an intermediate cooling device and in which the steam turbine comprises a high pressure steam turbine, an intermediate pressure steam turbine and a low pressure steam turbine. Heat from compressed air extracted from the compressor is transferred to condensate which is further led to either the low pressure steam turbine entry or to the outlet of the medium pressure steam turbine.

### SUMMARY OF THE INVENTION

An object of the invention is to provide a gas turbine combined cycle which can solve the disadvantages in the gas turbine combined cycle having various advantages in comparison with the simple gas turbine combined cycle by providing the intermediate cooling device, that is, a so-called intermediate cooling type gas turbine combined cycle, further improve a heat efficiency and improve an output.

Accordingly, it is structured such as to recover a cooling heat which cools a compression air discharged from a low pressure compressor, is recovered by an intermediate cooling device when being supplied to a high pressure compressor, is recovered by a rotor air cooler when supplying a cooling air obtained by cooling an extracted air from the high pressure compressor to a high temperature portion of a gas turbine and is conventionally discharged to an ambient air by a discharged heat recovery portion, and to generate a drive force also by the recovered heat, thereby increasing a drive force which can be output to an outer portion from the exhaust gas heat recovery portion and improve a total efficiency as a plant.

In order to achieve the object mentioned above, in accordance with the invention, there is provided a gas turbine combined cycle structured such as to branch a condensed water circulated to a steam generating device for generating a steam by recovering a heat from a condenser for making an exhaust gas discharged from a steam turbine a condensed water by means of an exhaust gas discharged from the gas turbine, cool a compression air discharged from a low pressure compressor, further compress the cooled compression air so as to supply to an intermediate cooling device for supplying to a high pressure compressor for making a high pressure air, and generate a steam which operates the steam turbine so as to output a drive force by the cooled heat recovered by the cooling of the compression air in the intermediate cooling device.

Further, in the gas turbine combined cycle in accordance with the invention mentioned above, in addition to the structure mentioned above, the condensed water to be supplied to the intermediate cooling device is structured such as to be heated so as to generate the steam also by a cooled heat recovered from a rotor cooling cooler which cools a part of the high pressure air discharged from the high pressure compressor for cooling a high temperature portion of the gas turbine or an extracted air extracted from a proper step of the high pressure compressor to a temperature capable of preferably cooling the high temperature portion, thereby making a cooled air.

Accordingly, since the structure was made such as to discharge the cooled heat recovered in the intermediate cooling device and the rotor cooling cooler outward while having the advantages (a) to (c) mentioned above in comparison with the simple gas turbine combined cycle, there were the disadvantages that the gas turbine efficiency was reduced and the efficiency of the exhaust gas heat recovery portion constituting the gas turbine combined cycle by being combined with the gas turbine portion was reduced, so that it was hard to apply the structure to the conventional gas turbine combined cycle. With respect to the disadvantages in the intermediate cooling type gas turbine combined cycle provided with the intermediate cooling device, it is structured such as to recover the discharged heat which is recovered in the intermediate cooling device and the rotor cooling cooler and conventionally discharged to the ambient air in the discharged heat recovery portion, so that it is possible to generate the drive force also by the discharged heat, it is possible to increase the drive force capable of outputting outward from the exhaust gas heat recovery portion and it is possible to improve a total efficiency as a plant. Therefore, it is possible to solve at least the disadvantage that the efficiency of the discharged heat recovery portion in the conventional intermediate cooling type gas turbine combined cycle is reduced, so that it is possible to make the intermediate cooling type combined gas turbine provided with the intermediate cooling device a gas turbine combined cycle which can sufficiently satisfy the advantages (a) to (c) mentioned above.

Further, in accordance with the invention, in addition to the structure mentioned above, there is provided a gas turbine combined cycle, in which the steam turbine comprises a high pressure steam turbine, an intermediate pressure steam turbine and a low pressure steam turbine, the steam generated from the condensed water by the cooled heat recovered by a cooling of the extracted air due to the compression air discharged from the low pressure compressor and the cooled air is supplied to any one of the intermediate pressure steam turbine and the low pressure steam turbine, and these steam turbines are operated so as to improve the drive force.

That is, in the gas turbine combined cycle in accordance with the invention, in addition to the feature mentioned above, since the structure is made such as to cool the compression air discharged from the low pressure compressor so as to supply to the high pressure compressor, it is possible to recover the recovered heat which is recovered in the intermediate cooling device, recovered in the rotor cooling cooler for making the extracted air from the high pressure compressor a cooled air in order to cool the high temperature portion of the gas turbine and conventionally discharged to the ambient air by a discharged heat recovery portion. Further, it is possible to convert the recovered heat recovered in the exhaust gas heat recovery portion into a drive force more, thereby further increasing the drive force capable of being outward output from the exhaust gas heat recovery portion and improving the combined efficiency.

### BRIEF DESCRIPTION OF THE DRAWINGS

Fig. 1 is a systematic view which shows an intermediate cooling type gas turbine combined cycle as a first embodiment of a gas turbine combined cycle in accordance with the invention;
Fig. 2 is a diagram which shows a heat exchange in an intermediate cooling device shown in Fig. 1; and
Fig. 3 is a systematic view which shows an intermediate cooling type combined gas turbine cycle in accordance with a conventional art.

### DESCRIPTION OF THE PREFERRED EMBODIMENTS

Hereinafter, an embodiment of a gas turbine combined cycle in accordance with the invention will be described below with reference to the drawings.

### (First Embodiment)

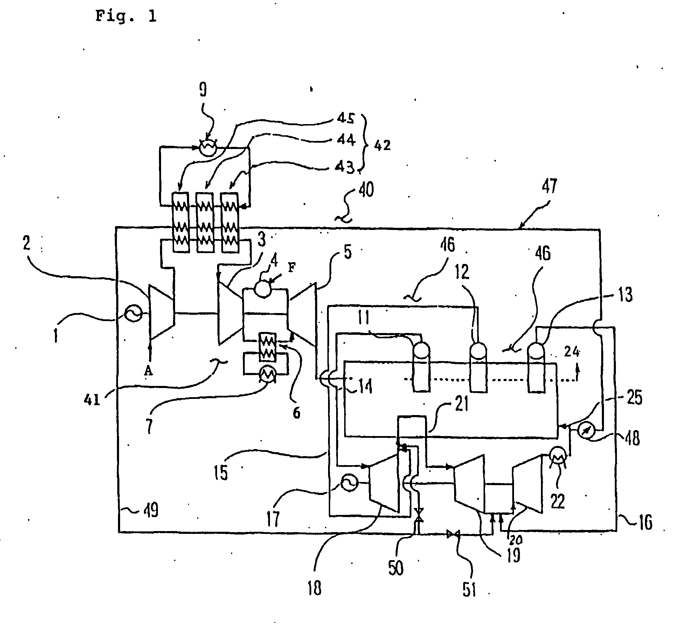

Fig. 1 is a systematic view which shows an intermediate cooling type gas turbine combined cycle as a first embodiment of a gas turbine combined cycle in accordance with the invention.

In this case, in the drawing, the same reference numerals are attached to the same elements as those shown in Fig. 3 and a detailed explanation thereof will be omitted.

A gas turbine portion 41 of the intermediate cooling type gas turbine combined cycle in accordance with this embodiment is provided with the same elements as the power generator 1, the low pressure compressor 2, the high pressure compressor 3, the combustion device 4, the gas turbine 5, the rotor cooling cooler 6, and the cooling towers 7 and 9 of the gas turbine portion 10 shown in Fig. 3.

Further, in place of the intermediate cooling device 8 shown in Fig. 3, it is structured such that an intermediate cooling device 42 constituted by an economizer 43, an evaporator 44 and a super heater 45 is provided.

Among them, the gas turbine portion 41 is structured in the same manner as that of the gas turbine 10 shown_in Fig. 3 mentioned above, such as to coaxially connect the high pressure compressor 3, the low pressure compressor 2 and the power generator 1, operate the compressors by the gas turbine 5 driven by the combustion gas as mentioned below, generate a predetermined high pressure air for burning the ambient air and generate a power by an excessive drive force.

However, the intermediate cooling device 42 for cooling the compression air having a temperature of 190 °C and discharged from the low pressure compressor 45 to about 100°C is constituted by the economizer 43, the evaporator 44 and the super heater 45, so that the cooled heat which deteriorates a heat efficiency of the conventional intermediate cooling type gas turbine combined cycle 30, makes it difficult to apply to the gas turbine combined cycle and is recovered in the intermediate cooling device 42 is converted into a power in an exhaust gas heat recovery portion 46 mentioned below without being discharged to the ambient air, and the disadvantage that the efficiency of the exhaust gas heat recovery portion 23 is reduced, particularly generated by a provision of the intermediate cooling device 8, can be avoided, and the structure can be applied to the intermediate cooling type gas turbine combined cycle 40 giving various advantages to the gas turbine combined cycle.

In this case, the cooling tower 9 for discharging the cooled heat recovered in the conventional intermediate cooling device 8 to the ambient air is provided in the same manner as the conventional manner, however, the cooling tower 9 in accordance with this embodiment is only used as a back up in the case that the condensed water is not sufficiently supplied to the intermediate'cooling device 42, a performance of the intermediate cooling device 42 is reduced, a temperature of the cooling air in an outlet of the high pressure compressor 3 is increased and a risk over an allowable stress for a turbine blade is generated when a partly load is applied, and is not used in an operation near a rated point of the intermediate cooling type gas turbine combined cycle 40.

On the contrary, in the exhaust gas heat recovery portion 46, there are provided the same elements as the high pressure steam generating device 11, the intermediate pressure steam generating device 12, the low pressure steam generating device 13, the high pressure steam pipe 14, the intermediate pressure steam pipe 15, the low pressure steam pipe 16, the power generator 17, the high pressure steam turbine 18, the intermediate pressure steam turbine 19, the low pressure steam turbine 20, the reheater 21 and the condenser 22 of the exhaust gas heat recovery portion 23 shown in Fig. 3.

Further, in the exhaust gas heat recovery portion 46, there is provided a pressurized water pipe 47 provided in such a manner as to branch from the condensed water supply pipe 25 for supplying the condensed water to each of the steam generating devices 11, 12 and 13 mentioned above from the condenser 22 and interposing a pressurizing pump 48 for supplying the condensed water to the intermediate cooling device 42 mentioned above, a heated steam pipe 49 for supplying a heated steam obtained by evaporating the condensed water by the cooled heat recovered by the intermediate cooling device 42 to the outlet of the high pressure steam turbine 18 and the outlet of the intermediate pressure steam turbine, and valves 50 and 51 respectively interposed in a connection portion of the heated steam pipe 49 to the outlet of the high pressure steam turbine 18 and a connection portion to the outlet of the intermediate pressure steam turbine 19.

In this exhaust gas heat recovery portion 46, in the same manner as that of the exhaust gas heat recovery portion 23 shown in Fig. 3, the heat recovery is performed from the high temperature exhaust gas so as to generate the steam having a high pressure, an intermediate pressure and a low pressure by successively passing the exhaust gas discharged from the gas turbine 5 and injected from the chimney 24 to the ambient air through the inner portions of the high pressure steam generating device 11, the intermediate pressure steam generating device 12 and the low pressure steam generating device 13. The respective steams are fed to the high pressure steam turbine 18, the intermediate pressure steam turbine 19 and the low pressure steam turbine 20 coaxially connected by the high pressure steam pipe 14, the intermediate pressure steam pipe 15 and the low pressure steam pipe 16 respectively, so that the turbines are operated and the output forces thereof drive the power generator 17 coaxially connected to the turbines so as to generate an electric energy.

Further, in the outlet of the high pressure steam turbine 18, it is structured such as to mix the exhaust gas of the high pressure steam turbine 18 with the intermediate pressure steam generated in the intermediate pressure steam generating device 12 and supplied through the intermediate pressure steam pipe 15, thereafter, heat the mixed steam by the reheater 21, increase the temperature of the inlet of the intermediate pressure steam turbine 19, supply the mixed steam to the intermediate pressure steam turbine 19 and increase the output of the intermediate pressure turbine 19. Further, in the outlet of the intermediate pressure steam turbine 19, it is structured such as to mix the exhaust gas of the intermediate pressure steam turbine 19 with the low pressure steam generated in the low pressure steam generating device 13 and supplied through the low pressure steam pipe 16, and thereafter supply the mixed steam to the low pressure steam turbine 20.

Further, in the outlet of the low pressure steam turbine 20, it is structured such as to return the exhaust vapor gas discharged from the low pressure steam turbine 20 by the condenser 22 to a water so as to supply to each of the high pressure steam generating device 11, the intermediate pressure steam generating device 12 and the low pressure steam generating device 13 as the condensed water.

Still further, in the exhaust gas heat recovery portion 48 in accordance with this embodiment, a part of the condensed water supplied from the condenser 22 to the steam generating devices 11, 12 and 13 is branched in the outlet of the condenser 22, increased to a predetermined pressure by the pressurizing pump 48 with commonly using an operation of valves 50 and 51 mentioned below, and supplied to the intermediate cooling device 42 through the pressurized water pipe 47.

The pressurized condensed water supplied to the intermediate cooling device 42 at first becomes a saturated water in the economizer 43, further becomes a saturated steam in the evaporator 44 and becomes a heated steam in the super heater 45.

As mentioned above, the calorie which is conventionally discharged to the ambient air in the cooling tower 9, supplied to the high pressure compressor 3 by cooling the compression air discharged from the low pressure compressor 2 and recovered in the intermediate cooling device 42 is used for increasing a temperature of the pressurized condensed water so as to make the heated steam.

Further, the heated steam is structured such as to mix the exhaust vapor gas of the high pressure steam turbine 18 with the intermediate pressure steam generated in the intermediate pressure steam generating device 12 and supplied through the intermediate pressure steam pipe 15 at the inlet of the reheater 21, that is, the outlet of the high pressure steam turbine 18 by the heated steam pipe 49, thereafter be heated by the reheater 21 and be supplied to the intermediate pressure steam turbine 19 so as to increase the output of the intermediate pressure steam turbine 19, or structured such as to mix the exhaust gas of the intermediate pressure steam turbine 19 with the low pressure steam generated in the low pressure steam generating device 13 and supplied through the low pressure steam pipe 16 at the inlet of the low pressure steam turbine 24, that is, the outlet of the intermediate pressure steam turbine 19, and thereafter be supplied to the low pressure steam turbine 20 so as to increase the output of the low pressure steam turbine 20.

At this time, in the case of pressurizing the branched condensed water to a pressure having the same level as that of the intermediate pressure steam in the pressurizing pump 48 so as to supply to the intermediate pressure steam turbine 19 (the reheater 21), it is possible to supply the heated steam to the inlet of the reheater 21 by fully opening the valve 50 and fully closing the valve 51 so as to pressurize.

Further, in the pressurizing pump 48, in the case of pressurizing the branched condensed water to a pressure having the same level as that of the low pressure steam so as to supply to the low pressure steam turbine 20, it is possible to supply the heated steam to the inlet of the low pressure steam turbine 20 by fully closing the valve 50 and fully opening the valve 51 so as to pressurize.

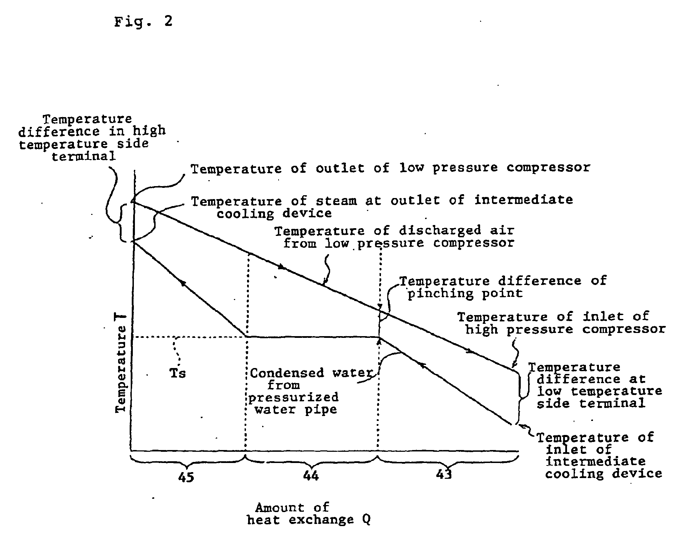

Next, a heat exchange between the pressurized condensed water and the cooled heat recovered in the intermediate cooling device 42 performed in the intermediate cooling device 42 will be described below with reference to Fig. 2.

In this case, a vertical axis in Fig. 2 indicates a temperature T and a horizontal axis indicates an exchanged calorie in each of the intermediate cooling device 42 comprising the economizer 43, the evaporator 44 and the super heater 45.

The condensed water pressurized by the pressurizing pump 48 is supplied to the economizer 43 through the pressurized water pipe 47 and in the economizer 43, is made the condensed water having a saturated temperature Ts and a pressure pressurized to the pressure of the intermediate pressure steam pressure or the pressure of the low pressure steam pressure by the pressurizing pump 48.

The condensed water made the saturated temperature Ts in the economizer 43 is further heated by the evaporator 44 so as to become a saturated steam, supplied to the super heater 45 and changed to the heated steam in the super heater 45, however, the amount of the steam generated from the pressurized condensed water is determined by a temperature difference of a terminal in a high temperature side and a temperature difference of a pinching point.

Here, when the amount of the steam generated in the intermediate cooling device 42 is determined, an amount of the heat exchange in the economizer 43 is determined and the temperature of the inlet of the high pressure compressor 3 is determined.

As mentioned above, in the intermediate cooling type gas turbine combined cycle 40 employed in the gas turbine combined cycle in accordance with this embodiment, the calorie conventionally discharged to the ambient air in the cooling tower 9 and recovered in the intermediate cooling device 42 is changed to the heated steam by the economizer 43, the evaporator 44 and the super heater 45 of the intermediate cooling device 42 with using the condensed water pressurized by the pressurizing pump 48 and the heated steam is supplied to the inlet of the reheater 21 or the inlet of the low pressure steam turbine 20, whereby the calorie is recovered as the output of the intermediate pressure steam turbine 19 or the low pressure steam turbine 20 and efficiently used. Accordingly, there can be obtained an advantage of improving a so-called combined efficiency, that is, the outputs of the gas turbine portion 41 and the exhaust gas heat recovery portion 46 are combined in addition to the output of the discharged heat recovery portion 46.

Therefore, since it is possible to solve the disadvantage that the combined efficiency becomes lower than that of the simple cycle, which corresponds to the problem of the intermediate cooling type gas turbine combined cycle 30 in accordance with the conventional art, the structure can be made a gas turbine combined cycle which can efficiently use the advantage which the inherent intermediate cooling type gas turbine combined cycle has.

Further, since it is possible to freely set the pressure level of the condensed water to a level of the intermediate pressure steam pressure or the low pressure steam pressure, there can be obtained an effect of making the amount of the steam generated in the intermediate cooling device 42 maximum so as to widely recover the output when a partial load is applied to the gas turbine.

### (Second Embodiment)

Further, an illustration is omitted in Fig. 1, however, it is possible to use a cooled heat which cools the extracted steam extracted from a part of the high pressure air discharged from the high pressure compressor 3 in the gas turbine portion 41 or from a predetermined step of the high pressure compressor 3 and becoming a high temperature and a high pressure to about 200 °C and is recovered by the rotor cooling cooler 6 for making a cooled air for cooling the rotor blade or the stator blade exposed to the high temperature combustion gas of the gas turbine 5 from the inner portion through the inner portion of the rotor of the gas turbine 5, for generating the steam from the condensed water.

That is, in Fig. 1, there is shown the embodiment in which the cooled heat recovered in the rotor cooling cooler 6 is discharged to the ambient air by the cooling tower 7, however, in the same manner as the intermediate cooling device 42 mentioned above, the structure can be made such that an apparatus for generating a steam from the condensed water comprising the economizer, the evaporator and the super heater is provided so as to recover the cooled heat obtained when making the extracted steam the cooled air.

However, the temperature of the extracted steam is significantly high in comparison with the compression air discharged from the low pressure compressor 2 having a temperature of about 190°C, the temperature of the cooled air supplied to the high temperature portion of the gas turbine 5 from the rotor cooling cooler 6 is set to about 200 °C which is higher than the temperature of the compression air discharged from the low pressure compressor 2, and the flow amount of the cooled air is set to be sufficiently smaller than the flow amount of the high pressure air supplied from the high pressure compressor 3 to the combustion device 4 and used for the combustion. Since the above items give a great advantage in view of an efficiency of the gas turbine and an increase of an output as mentioned above, in place of the same structure as that of the intermediate cooling device 42, it is preferable that there is provided a super heater for further heating the heated steam supplied to the outlet of the high pressure steam turbine 18 and the outlet of the intermediate pressure steam turbine from the super heater 45 of the intermediate cooling device 42 by the heated steam pipe 49 because a lot of advantages can be obtained in view of the structure and the cost.

As mentioned above, in addition to the cooled heat recovered in the intermediate cooling device 42, the cooled heat recovered in the rotor cooling cooler 6 is recovered in the exhaust gas heat recovery portion 46, so that in the same manner as the gas turbine combined cycle mentioned above, there can be obtained a gas turbine combined cycle which can use the advantages of the inherent intermediate cooling type gas turbine combined cycle in a more efficient manner than the gas turbine cycle mentioned above with solving the disadvantage that the efficiency of the inherent intermediate cooling type gas turbine combined cycle becomes lower than the simple cycle, and can improve the combined efficiency.

## Claims

1. A gas turbine combined cycle comprising
a gas turbine portion (41) including a low pressure compressor (2), an intermediate cooling device (42) for cooling compression air discharged from said low pressure compressor (2), a high pressure compressor (3) for further compressing the compression air from said intermediate cooling device (42) so as to generate high pressure air, a combustion device (4) for burning said high pressure air and a supplied fuel (F) and a gas turbine (5) driven by the combustion gas from said combustion device (4) so as to generate power, and
an exhaust gas heat recovery portion (46) including a steam generating device (11,12,13) for recovering heat from an exhaust gas discharged from said gas turbine (5) so as to generate steam, a steam turbine (18,19,20) driven by steam from said steam generating device (11,12,13) so as to generate power and a condenser (22) for returning the exhaust vapor gas discharged from said steam turbine (18,19,20) to condensed water, wherein said condensed water circulated to said steam generating device (11,12,13) from said condenser (22) is branched and introduced to said intermediate cooling device (42) so as to generate steam for driving said steam turbine (18,19,20);
**characterized in that**
high pressure air extracted from said high pressure compressor (3) is introduced to a rotor cooling cooler (6) for generating cooled air for cooling a high temperature portion of said gas turbine (5) and said condensed water circulated from said condenser (22) to said steam generating device (11,12,13) is branched and introduced to said rotor cooling cooler (6) so as to generate steam for driving said steam turbine (18,19,20); and
said steam turbine comprises high pressure steam turbine (18), an intermediate pressure steam turbine (19) and a low pressure steam turbine (20), and steam generated from said condensed water in said intermediate cooling device (42) and said rotor cooling cooler (6) is supplied to any one of said intermediate pressure steam turbine (19) and said low pressure steam turbine (20).

## Patentansprüche

1. Gasturbinen-Kombikrafwerk mit:
einem Gasturbinenabschnitt (41) mit einem Niederdruckkompressor (2), einer Zwischenkühlvorrichtung (42) zum Kühlen von aus dem Niederdruckkompressor (2) ausgetragener Druckluft, einem Hochdruckkompressor (3) zum weiteren Komprimieren der Druckluft aus der Zwischenkühlvorrichtung (42), um Hochdruckluft zu erzeugen, einer Verbrennungsvorrichtung (4) zum Verbrennen der Hochdruckluft und eines zugeführten Brennstoffs (F), und einer von dem Verbrennungsgas aus der Verbrennungsvorrichtung (4) angetriebenen Gasturbine (5) zur Energieerzeugung, und
einem Abgaswärme-Rückgewinnungsabschnitt (46) mit einer Dampferzeugungsvorrichtung (11,12,13) zum Zurückgewinnen von Wärme aus dem aus der Gasturbine (5) ausgetragenen Abgas, um Dampf zu erzeugen, einer von dem Dampf aus der Dampferzeugungsvorrichtung (11,12,13) angetriebenen Dampfturbine (18,19,20), um Energie zu erzeugen, und einem Kondensator (22) zum Zurückbilden des aus der Dampfturbine (18,19,20) ausgetragenen Abdampfgases zu Kondenswasser, wobei das Kondenswasser, das von dem Kondensator (22) zu der Dampferzeugungsvorrichtung (11,12,13) zirkuliert wird, zu der Zwischenkühlvorrichtung (42) abgezweigt und in diese eingeleitet wird, um Dampf zum Antreiben der Dampfturbine (18,19,20) zu erzeugen,
**dadurch gekennzeichnet, dass**
aus dem Hochdruckkompressor (3) extrahierte Hochdruckluft in einen Rotorkühlungs-Kühler (6) zum Erzeugen von Kühlluft zum Kühlen eines Hochtemperaturabschnitts der Gasturbine (5) eingeleitet wird und das aus dem Kondensator (22) zu der Dampferzeugungsvorrichtung (11,12,13) zirkulierte Kondenswasser abgezweigt und in den Rotorkühlungs-Kühler (6) eingeleitet wird, um Dampf zum Antreiben der Dampfturbine (18,19,20) zu erzeugen, und
die Dampfturbine eine Hochdruck-Dampfturbine (18), eine Zwischendruck-Dampfturbine (19) und eine Niederdruck-Dampfturbine (20) umfasst, und aus dem Kondenswasser in der Zwischenkühlvorrichtung (42) und dem Rotorkühlungs-Kühler (6) erzeugter Dampf entweder der Zwischendruck-Dampfturbine (19) oder der Niederdruck-Dampfturbine (20) zugeführt wird.

## Revendications

1. Cycle combiné à turbine à gaz comportant :
une partie (41) de turbine à gaz ayant un compresseur (2) à basse pression, un dispositif (42) de refroidissement intermédiaire pour refroidir de l'air de compression déchargé du compresseur (2) à basse pression, un compresseur (3) à haute pression pour comprimer encore plus l'air de compression provenant du dispositif (42) de refroidissement intermédiaire de manière à produire de l'air à haute pression, un dispositif (4) de combustion pour brûler l'air à haute pression et un combustible (F) d'alimentation et une turbine (5) à gaz entraînée par le gaz de combustion provenant du dispositif (4) de combustion, de manière à produire de l'énergie, et
une partie (46) de récupération de chaleur de gaz d'échappement ayant un dispositif (11, 12, 13) de production de vapeur pour récupérer de la chaleur d'un gaz d'échappement déchargé de la turbine (5) à gaz de manière à produire de la vapeur, une turbine (18, 19, 20) à vapeur entraînée par de la vapeur provenant du dispositif (11, 2, 13) de production de vapeur de manière à produire de l'énergie et un condenseur (22) pour renvoyer le gaz vapeur d'échappement déchargé de la turbine (18, 19, 20) à vapeur à l'eau condensée, l'eau condensée qui est mise en circulation vers le dispositif (11, 12, 13) de production de vapeur en provenance du condenseur (22) étant acheminée et introduite vers le dispositif (42) de refroidissement intermédiaire de manière à produire de la vapeur pour entraîner la turbine (18, 19, 20) à vapeur ;
**caractérisé en ce que**
de l'air à haute pression extrait du compresseur (3) à haute pression est introduit dans un dispositif (6) de refroidissement de rotor pour produire de l'air refroidi pour refroidir une partie à haute température de la turbine (5) à gaz et l'eau condensée mise en circulation à partir du condenseur (22) vers le dispositif (11, 12, 13) de production de vapeur est mise en circulation et introduite dans le dispositif (6) de refroidissement de rotor de manière à produire de la vapeur pour entraîner la turbine (18, 19, 20) à vapeur ; et
la turbine à vapeur comporte une turbine (18) à vapeur à haute pression, une turbine (19) à vapeur à pression intermédiaire et une turbine (20) à vapeur à basse pression, et de la vapeur produite à partir de l'eau condensée dans le dispositif (42) de refroidissement intermédiaire et le dispositif (6) de refroidissement de rotor est envoyée à l'une quelconque de la turbine (19) à vapeur à pression intermédiaire et de la turbine (20) à vapeur à basse pression.
